# EUROPEAN PATENT SPECIFICATION

(11) **EP 0 901 935 B1**
(45) Date of publication and mention of the grant of the patent: **26.01.2005**
(21) Application number: 98305781.1
(22) Date of filing: 20.07.1998
(51) Int. Cl.: B60N 2/28

(54) **Child seat anchorage**
Verankerung für Kindersitze
Fixation pour sièges d'enfants

(30) Priority: 11.09.1997 GB 9719280
(43) Date of publication of application: 17.03.1999
(73) Proprietor: Ford Motor Company Limited, Brentwood, Essex CM13 3BW (GB); FORD-WERKE AKTIENGESELLSCHAFT, 50735 Köln (DE); FORD FRANCE S.A., 92506 Rueil-Malmaison Cédex (FR)
(72) Inventor: Gregar, John, Wickford, Essex SS11 7LF (GB); Scott, Timothy, Benfleet, Essex SS7 5TA (GB)
(74) Representative: Messulam, Alec Moses

(56) References cited:
- EP-A- 0 537 019
- EP-A- 0 560 184
- EP-A- 0 619 202
- EP-A- 0 646 491
- EP-A- 0 703 113
- GB-A- 2 302 274
- US-A- 5 536 066

## Description

The present invention relates to a motor vehicle which has a passenger seat provided with means for anchoring a child seat to it, and to a device for use in anchoring a child seat to a motor vehicle seat.

The prior art is illustrated e.g. by EP-A-537019 and GB-A-2302274.

Some vehicle child seats are secured in a vehicle passenger seat by a pair of clips or latches on the child seat which are releasably mounted on a pair of rigid anchorage points in the vehicle. Such rigid anchorage points are specified, for example, in Isofix standard documentation. The anchorage points are located in the seat bight between the squab and the seat-back. The linkages between the clips or latches on the child seat and the anchorage points are sufficiently rigid to secure a child seat to the passenger seat without the need for any other securing means to be used.

The provision of rigid anchorage points makes folding of the seat difficult, because the anchorages prevent the seat-back from being fully lowered. The anchorage points may also be uncomfortable for a passenger sitting in the seat when the child seat is not mounted on the seat. Further problems with the above arrangement are that the clips on the child seat are liable to damage the fabric of the seat-back or to damage an adjacent socket for a seat belt buckle, if accidentally pushed into the socket.

It is an object of the present invention to provide a child seat anchorage device which reduces at least one of the above problems.

According to a first aspect of the present invention there is provided a motor vehicle which includes at least one passenger seat comprising a squab and a seat-back and being provided with a pair of laterally spaced-apart anchorage members for anchoring a child seat, the anchorage members being pivotally mounted in relation to the seat whereby the anchorage members can be pivoted between a use position in which they are upwardly disposed through a gap between the squab and the seat-back so that a clip or latch of a child seat can be secured to it, and a stowage position in which the anchorage members are disposed beneath or behind the squab, the anchorage members being constrained to pivot in opposite directions to one another when moving from the use position to the stowage position or *vice versa*.

Because the anchorage members are pivotable, they can be stowed away behind the squab of the vehicle seat when not required. The seat-back can be tilted fully forward when the anchorage members are in the stowage position, and passengers not requiring a child seat are not discomforted by upwardly projecting anchorage members.

Because the anchorage members are constrained to pivot in opposite directions to one another when moving from the use position to the stowage position and *vice versa* (ie, one pivoting clockwise and the other pivoting counterclockwise), at least one anchorage member will resist any sideways load applied to the child seat in the event of a side impact.

Although the anchorage members may be supplied and fitted individually, it is preferred that they are connected together as a child seat anchoring device by spacing means. Any suitable spacing means may be used, for example a rigid bar or a pair of bars which are telescopically adjustable so that the distance between the anchorage members can be varied by the user to accommodate different designs of child seat. Such child seat anchoring devices may be manufactured and sold separately from a motor vehicle.

Accordingly, a second aspect of the present invention therefore provides a device for anchoring a child seat on a vehicle seat comprising a squab and a seat-back, the device comprising a pair of anchorage members and a pair of brackets for mounting the anchorage members in relation to a vehicle seat, the brackets being connected together by spacing means, each anchorage member being pivotally mounted to an associated bracket so that when the brackets are suitably mounted in relation to a vehicle seat each anchorage member can be pivoted between a use position in which it is upwardly disposed through a gap between the squab and the seat-back so that a clip of a child seat can be secured to it, and a stowage position in which the anchorage member is disposed behind or beneath the squab, the anchorage members being constrained to pivot in opposite directions to one another when moving from the use position to the stowage position or *vice versa*.

Where the distance between mounting clips on child seats is standardised, a rigid connecting bar would normally be appropriate, and the invention will be described hereinafter with reference to this embodiment. However, it is to be understood that the invention is not limited to this embodiment.

The spacing means keeps the anchorage members separated by a substantially fixed distance. A metal bar with some flexibility could be used, but it is preferred that the spacing means is substantially non-flexible.

Each anchorage member may be provided with a detent so that it resists being pivoted from the use position. Suitable detent mechanisms will be well known to those skilled in the art.

Each anchorage member can be of any shape providing it can receive and secure the clip of a child seat and can be pivoted between the squab and seat-back of a vehicle seat. Each anchorage member may, for example, comprise a rod, bar or bolt, or a loop or ring to which the clip may be releasably secured. The anchorage members are preferably formed from a metal, for example steel, but other structural materials could also be used.

Where the passenger seat can tilt forward it is preferred, for safety reasons, that the anchorage members can only be used when the seat-back is latched in an upright position. This may be achieved by providing an interlock mechanism associated with the seat latch release mechanism, whereby when the seat-back is unlatched the interlock prevents raising of the anchorage members. Similarly, an interlock mechanism may prevent unlatching of the seat-back when an anchorage member is in the use position.

A link may be provided which automatically retracts the anchorage members when the seat-back is folded. This link may be a continuous mechanical link or a trigger mechanism which activates retraction of the anchorage members under a spring bias associated with each anchorage member.

Suitable interlock and link mechanisms will be well known to those skilled in the art.

The anchorage members should preferably be disposed either in the use position or the stowage position. It is therefore preferred that spring biasing means are provided to urge the use position or the stowage position.

In a particularly preferred embodiment, each anchorage member is provided with a guard plate which is disposed between the seat-back and the anchorage member when the anchorage member is in the use position. The guard plate protects the seat-back from the clip or latches on the child seat. The guard plate may be formed from any suitable material, but it is preferably formed from a tough plastics material.

The guard plate may be provided with a finger hole to facilitate lifting of the anchorage member out from behind or below the squab of the vehicle seat.

A guard plate may be arranged to move the seat's seatbelt webbing to one side when its associated anchorage member is raised, to ensure that the webbing is not contacted by the child seat latch during seat installation.

At least one anchorage member may optionally be provided with a cover, for example of a plastics material, arranged or adapted to overlie a seatbelt buckle socket when the anchorage member is in the use position. The cover helps to protect the socket against accidental damage from a clip or latch of the child seat. The protective cover may conveniently be provided as a flap or ear depending from the guard plate.

To facilitate finger access to and/or pivoting of the anchorage members, the foam density of material in the seat-back may be reduced in the region of the anchorage members when in the use position

Although a child seat can be sufficiently anchored by means of the two anchorage members alone, an upper tether may optionally be additionally provided. The tether may be mounted on the top or rear of the passenger seat, or on the parcel shelf where the parcel shelf is strong enough, for example in a four wheel drive vehicle with a metal parcel shelf. The tether may comprise a fixing point for a cord or the like, or a strap for securing to a child seat.

When the device is fitted to a rear passenger seat it will typically be bolted to the floor. When fitted to a front passenger seat it may be bolted to the seat frame, preferably to the seat base. The device may be so shaped that it can only be mounted in the correct orientation, providing "mistake-proof mounting".

The invention will now be further described, by way of example, with reference to the following drawing in which:
Figure 1 is a perspective view of a child seat mounted on a vehicle seat provided with an anchoring device in accordance with the present invention;
Figure 2 is an exploded isometric view of part of a child seat anchoring device in accordance with the present invention;
Figure 3 is an isometric view of an assembly for anchoring a child seat, in accordance with the present invention; and
Figure 4 is a side elevational view of the assembly shown in Figure 3.

A child seat 2 is provided with a pair of jaws 8 for securing to anchorage members 10 in a vehicle seat, by means of a known latch or clip mechanism (not shown).

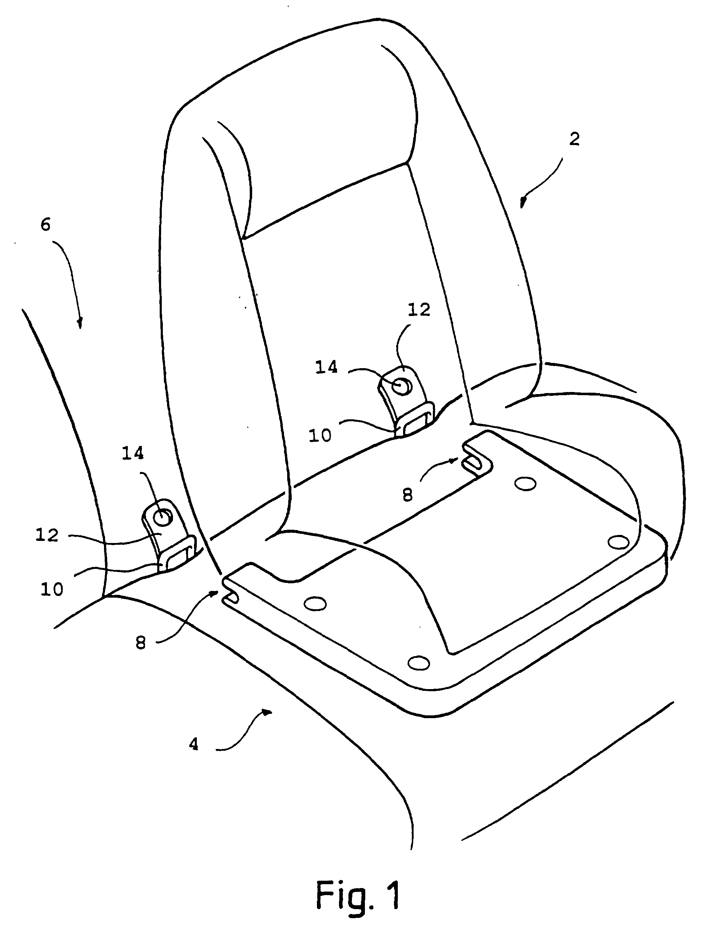

The anchorage members 10 of the present invention are shown in Figure 1 in an upright use position, disposed in the seat bight between the squab 4 and seat-back 6 of the vehicle seat. To secure the child seat 2, it is pushed back in the vehicle seat until the latch or clip mechanisms engage with the corresponding anchorage members.

A guard plate 12, formed from a 1 mm thick sheet of plastics material, is disposed between the anchorage member 10 and the seat-back 6. The guard plate 12 protects the seat-back from the latch or clip mechanism, or the jaws 8, of the child seat 2. The guard plate 12 is provided with a finger hole 14 to facilitate lifting of the anchorage member 10 from a stowage position to the use position shown in Figure 1. The guard plate 12 follows the contour of the seat-back 6.

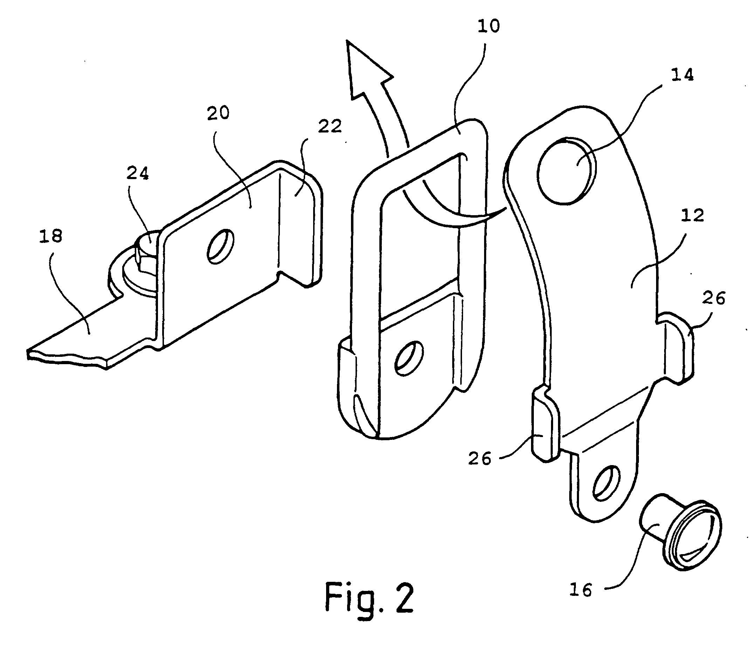

Referring now to Figure 2, the child seat anchorage device comprises the anchorage member 10, which is formed from a 6 mm diameter steel rod, a mounting bracket 20, and the guard plate 12. These components are assembled on a pivot pin 16, with the upper portion of the guard plate 12 being disposed through the loop of the anchorage member 10 as shown by the arrow. A pair of resilient tabs 26 on the guard plate 12 secure the guard plate about the anchorage member 10. The bracket 20 is secured to the floor of the vehicle, underneath the squab, by means of a bolt 24.

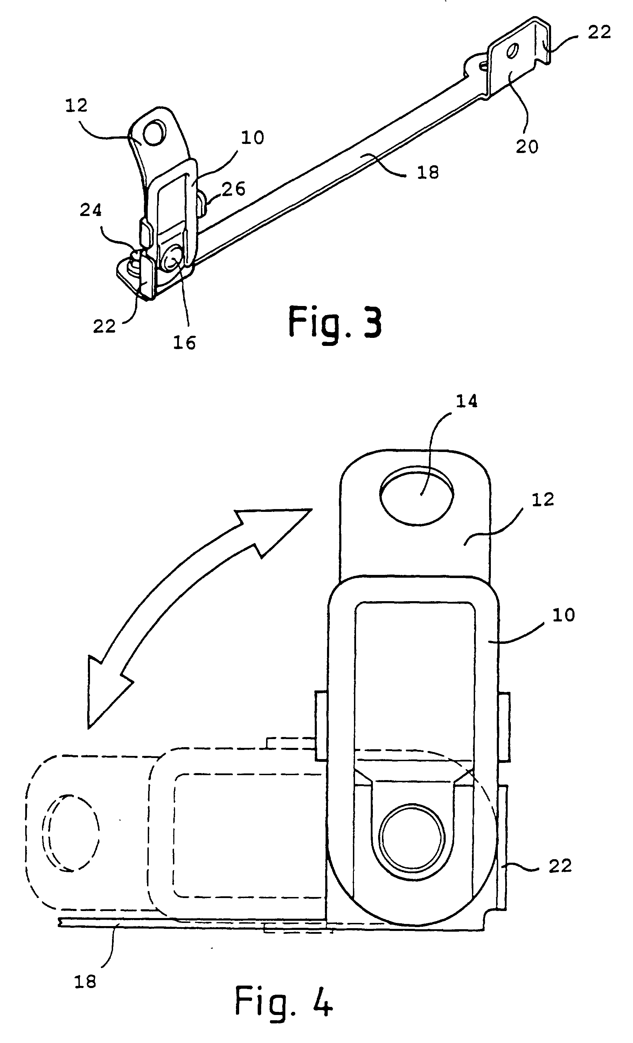

The assembled device is shown in Figure 3. A pair of brackets 20 are connected together by means of a rigid metal tie bar 18. For the purpose of illustration, one device of the assembly is shown, the other device being a mirror image. Each anchorage member 10 can be pivoted away from the middle of the bar 18 to the use position shown in Figure 4, and towards the middle of the bar 18 to the stowage position shown in broken lines in Figure 4. In the stowage position the anchorage members 10 are disposed in the seat bight behind the squab 4.

An end stop 22 on the bracket prevents pivoting of the anchorage member 10 beyond the use position, so that if the seat is subjected to a sideways load, one of the assemblies will resist pivotal movement under the load. The tendency to resist pivotal movement away from the use position may optionally be increased by the use of a detent mechanism between the anchorage member and the bracket.

## Claims

1. A motor vehicle which includes at least one passenger seat comprising a squab (4) and a seat-back (6) and being provided with a pair of laterally spaced-apart anchorage members (10) for anchoring a child seat (2), **characterised in that** the anchorage members (10) are pivotally mounted in relation to the seat whereby the anchorage members (10) can be pivoted between a use position in which they are upwardly disposed through a gap between the squab (4) and the seat-back (6) so that a clip or latch (8) of a child seat (2) can be secured to it, and a stowage position in which the anchorage members (10) are disposed beneath or behind the squab (4), the anchorage members (10) being constrained to pivot in opposite directions to one another when moving from the use position to the stowage position or *vice versa.*

2. A motor vehicle as claimed in claim 1, wherein at least one of the anchorage members is provided with a detent so that it resists being pivoted from the use position.

3. A motor vehicle as claimed in claim 1 or claim 2, wherein the anchorage members are connected together as a child seat anchoring device by spacing means.

4. A motor vehicle as claimed in any one of claims 1 to 3, wherein the passenger seat can tilt forward on actuation of a seat latch release mechanism, and wherein an interlock mechanism is associated with the seat latch release mechanism whereby when the seat-back is unlatched the interlock prevents deployment of the anchorage members to the use position.

5. A motor vehicle as claimed in any one of the preceding claims, wherein the passenger seat can tilt forward on actuation of a seat latch release mechanism, and wherein an interlock mechanism is associated with the seat latch release mechanism whereby unlatching of the seat-back is prevented when an anchorage member is in the use position.

6. A motor vehicle as claimed in any one of claims 1 to 4, wherein a link is provided which automatically moves the anchorage members from the use position to the stowage position when the seat-back is folded.

7. A motor vehicle as claimed in any one of the preceding claims, wherein each anchorage member is provided with a guard plate which is disposed between the seat-back and the anchorage member when the anchorage member is in the use position.

8. A motor vehicle as claimed in claim 7, wherein each guard plate is provided with a finger hole to facilitate lifting of the anchorage member out from behind or below the squab.

9. A motor vehicle as claimed in claim 7 or claim 8, wherein the guard plate is arranged or adapted to move the seat's seatbelt webbing to one side when its associated anchorage member is raised, to ensure that the webbing is not contacted by a child seat latch during seat installation.

10. A motor vehicle as claimed in any one of the preceding claims, wherein at least one anchorage member is provided with a cover arranged to overlie a seatbelt buckle socket when the anchorage member is in the use position.

11. A motor vehicle as claimed in claim 10 when dependent on claim 7, wherein the cover is a flap or ear which depends from the guard plate.

12. A motor vehicle as claimed in any one of the preceding claims, wherein the foam density of material in the seat-back is reduced in the region of the anchorage members when in the use position.

13. A motor vehicle as claimed in any one of the preceding claims, wherein an upper tether is provided, to which a child seat can be anchored when mounted on the vehicle seat.

14. A device for anchoring a child seat (2) on a vehicle seat comprising a squab (4)and a seat-back (6), **characterised in that** the device comprises a pair of anchorage members (10) and a pair of brackets (20) for mounting the anchorage members (10) in relation to a vehicle seat, the brackets (20) being connected together by spacing means (18), each anchorage member (10) being pivotally mounted to an associated bracket (20) so that when the brackets are suitably mounted in relation to a vehicle seat each anchorage member (10) can be pivoted between a use position in which it is upwardly disposed through a gap between the squab (4) and the seat-back (6) so that a clip (8) of a child seat (2) can be secured to it, and a stowage position in which the anchorage member (10) is disposed behind or beneath the squab (4), the anchorage members (10) being constrained to pivot in opposite directions to one another when moving from the use position to the stowage position or *vice versa.*

15. A device as claimed in claim 14, wherein the spacing means is substantially rigid.

16. A device as claimed in claim 14 or claim 15, wherein spring biasing means are provided to urge the anchorage members to the use position or the stowage position.

17. A device as claimed in any one of claims 14 to 16, wherein each anchorage member is provided with a guard plate which will be disposed between the seat-back and the anchorage member when the anchorage member is secured in relation to a vehicle seat and in the use position.

18. A device as claimed in claim 17, wherein each guard plate is provided with a finger hole to facilitate lifting of the anchorage member.

## Patentansprüche

1. Kraftfahrzeug mit wenigstens einem Beifahrersitz mit einem Sitzkissen (4) und einer Sitzrückenlehne (6) und versehen mit zwei seitlich von einander beabstandeten Verankerungsteilen (10) zur Verankerung eines Kindersitzes (2),
**dadurch gekennzeichnet, daß** die Verankerungsteile (10) schwenkbar in bezug auf den Sitz angebracht sind, so daß die Verankerungsteile zwischen einer Gebrauchsstellung, in welcher sie aufrecht durch den Spalt zwischen dem Sitzkissen (4) und der Sitzrückenlehne (6) ragend angeordnet sind, so daß ein Verrasthaken oder eine Schnalle (8) eines Kindersitzes (2) daran befestigt werden kann, und einer Verstauposition, in welcher die Verankerungsteile (10) unter oder hinter dem Sitzkissen (4) verstaut sind, verschwenkt werden können, wobei die Verankerungsteile (10) so zwangsgesteuert sind, daß sie in gegensinniger Richtung zueinander verschwenkt werden, wenn sie von der Gebrauchsstellung in die Verstaustellung verschwenkt werden und umgekehrt.

2. Kraftfahrzeug nach Anspruch 1, worin wenigstens eines der Verankerungsteile mit einer Verrastung versehen ist, so daß es einer Verschwenkbewegung aus der Gebrauchsstellung heraus widersteht.

3. Kraftfahrzeug nach Anspruch 1 oder Anspruch 2, worin die Verankerungsteile über Abstandshaltermittel als Verankerungsvorrichtung für einen Kindersitz miteinander verbunden sind.

4. Kraftfahrzeug nach einem beliebigen der Ansprüche 1 bis 3, worin der Beifahrersitz bei Betätigung eines Sitz-Entriegelungsmechanismus nach vorne gekippt werden kann, und worin ein Mechanismus zur gegenseitigen Verriegelung mit dem Sitz-Entriegelungsmechanismus verbunden ist, so daß, wenn die Sitzrückenlehne entriegelt wird, die gegenseitige Verriegelung ein Aufstellen der Verankerungsteile in die Gebrauchsstellung verhindert.

5. Kraftfahrzeug nach einem beliebigen der vorangehenden Ansprüche, worin der Beifahrersitz bei Betätigung eines Sitz-Entriegelungsmechanismus nach vorne gekippt werden kann, und worin ein Mechanismus zur gegenseitigen Verriegelung mit dem Sitz-Entriegelungsmechanismus verbunden ist, wodurch die Entriegelung der Sitzrückenlehne verhindert wird, wenn ein Verriegelungsteil in der Gebrauchsstellung steht.

6. Kraftfahrzeug nach einem beliebigen der Ansprüche 1 bis 4, worin ein Kuppelglied vorgesehen ist, das die Verankerungsteile automatisch von der Gebrauchsstellung in die Verstauposition bringt, wenn die Sitzrückenlehne umgeklappt wird.

7. Kraftfahrzeug nach einem beliebigen der vorangehenden Ansprüche, worin jedes Verankerungsteil mit einer Schutzplatte versehen ist, die zwischen der Sitzrückenlehne und dem Verankerungsteil angeordnet ist, wenn sich das Verankerungsteil in der Gebrauchsstellung befindet.

8. Kraftfahrzeug nach Anspruch 7, worin jede Schutzplatte mit einem Griffloch versehen ist, um das Aufstellen des Verankerungsteils aus seiner Lage hinter oder unter dem Sitzkissen heraus zu erleichtern.

9. Kraftfahrzeug nach Anspruch 7 oder Anspruch 8, worin die Schutzplatte so angeordnet oder ausgelegt ist, daß sie den Gurt des Sicherheitsgurtes des Sitzes zur Seite bewegt, wenn das ihr zugeordnete Verankerungsteil aufgestellt wird, um somit sicherzustellen, daß der Gurtteil des Sicherheitsgurtes beim Einbau des Kindersitzes nicht mit der Schnalle des Kindersitzes in Berührung kommt.

10. Kraftfahrzeug nach einem beliebigen der vorangehenden Ansprüche, worin wenigstens ein Verankerungsteil mit einer Abdeckung versehen ist, die so angeordnet ist, daß sie ein Sicherheitsgurtschnallengehäuse abdeckt, wenn sich das Verankerungsteil in der Gebrauchsstellung befindet.

11. Kraftfahrzeug nach Anspruch 10 in Abhängigkeit von Anspruch 7, worin die Abdeckung eine Abdeckklappe oder ein Ansatz ist, die/der an der Schutzplatte angesetzt ist.

12. Kraftfahrzeug nach einem beliebigen der vorangehenden Ansprüche, worin die Schaumdichte des Materials in der Sitzrückenlehne in dem Bereich verringert ist, wo sich die Ankerteile befinden, wenn sie in der Gebrauchsstellung sind.

13. Kraftfahrzeug nach einem beliebigen der vorangehenden Ansprüche, worin ein oberes Halteseil vorgesehen ist, an dem ein Kindersitz verankert werden kann, wenn er auf dem Fahrzeugsitz angebracht wird.

14. Vorrichtung zur Verankerung eines Kindersitzes (2) auf einem Fahrzeugsitz mit einem Sitzkissen (4) und einer Sitzrückenlehne (6),
**dadurch gekennzeichnet, daß** die Vorrichtung zwei Verankerungsteile (10) und zwei Befestigungsflansche (20) zur Befestigung der Verankerungsteile (10) in bezug auf den Fahrzeugsitz aufweist, wobei die Befestigungsflansche (20) über Abstandshaltermittel (18) miteinander verbunden sind, wobei jedes der Verankerungsteile (10) schwenkbar an dem ihm zugeordneten Befestigungsflansch (20) angelenkt ist, so daß, wenn die Befestigungsflansche passend in bezug auf einen Fahrzeugsitz angebracht sind, jedes Verankerungsteil (10) zwischen einer Gebrauchsstellung, in welcher es aufrecht durch den Spalt zwischen dem Sitzkissen (4) und der Sitzrückenlehne (6) ragend angeordnet ist, so daß ein Verrasthaken oder eine Schnalle (8) eines Kindersitzes (2) daran befestigt werden kann, und einer Verstauposition, in welcher die Verankerungsteile (10) unter oder hinter dem Sitzkissen (4) verstaut sind, verschwenkt werden kann, wobei die Verankerungsteile (10) so zwangsgesteuert sind, daß sie in gegensinniger Richtung zueinander verschwenkt werden, wenn sie von der Gebrauchsstellung in die Verstaustellung verschwenkt werden und umgekehrt.

15. Vorrichtung nach Anspruch 14, worin die Abstandshaltermittel im wesentlichen starr sind.

16. Vorrichtung nach Anspruch 14 oder Anspruch 15, worin federnde Vorspannmittel vorgesehen sind, die die Verankerungsteile in die Gebrauchsstellung oder in die Verstaustellung vorspannen.

17. Vorrichtung nach einem beliebigen der Ansprüche 14 bis 16, worin jedes Verankerungsteil mit einer Schutzplatte ausgestattet ist, die zwischen der Sitzrückenlehne und dem Verankerungsteil liegt, wenn das Verankerungsteil in bezug auf einen Fahrzeugsitz befestigt ist und sich in der Gebrauchsstellung befindet.

18. Vorrichtung nach Anspruch 17, worin jede Schutzplatte mit einem Griffloch versehen ist, um das Aufstellen des Verankerungsteils zu erleichtern.

## Revendications

1. Véhicule à moteur comportant au moins un siège de passager qui comprend une assise (4) et un dossier (6), et est muni d'une paire de pièces d'ancrage (10) espacées latéralement pour assurer l'ancrage d'un siège d'enfant (2), **caractérisé par le fait que** les pièces d'ancrage (10) sont montées pivotantes par rapport au siège, de telle sorte que lesdites pièces d'ancrage (10) puissent être animées de pivotements entre une position d'utilisation, dans laquelle elles sont engagées vers le haut à travers un interstice réservé entre l'assise (4) et le dossier (6), de façon qu'une attache ou un verrou (8) d'un siège d'enfant (2) puisse y être fixé(e) ; et une position d'escamotage dans laquelle les pièces d'ancrage (10) sont disposées sous ou derrière l'assise (4), les pièces d'ancrage (10) étant animées de pivotements forcés dans des directions mutuellement opposées lors d'un déplacement depuis la position d'utilisation jusqu'à la position d'escamotage, ou inversement.

2. Véhicule à moteur selon la revendication 1, dans lequel au moins l'une des pièces d'ancrage est pourvue d'un organe à déclic, de telle sorte qu'elle s'oppose à un pivotement à partir de la position d'utilisation.

3. Véhicule à moteur selon la revendication 1 ou la revendication 2, dans lequel les pièces d'ancrage sont reliées ensemble par un moyen d'espacement, en constituant un dispositif d'ancrage d'un siège d'enfant.

4. Véhicule à moteur selon l'une quelconque des revendications 1 à 3, dans lequel le siège de passager peut basculer vers l'avant lors de l'actionnement d'un mécanisme de libération du verrou de siège ; et dans lequel un mécanisme d'interverrouillage est associé au mécanisme de libération du verrou de siège, de façon telle que, lorsque le dossier est déverrouillé, l'interverrouillage interdise un déploiement des pièces d'ancrage vers la position d'utilisation.

5. Véhicule à moteur selon l'une quelconque des revendications précédentes, dans lequel le siège de passager peut basculer vers l'avant lors de l'actionnement d'un mécanisme de libération du verrou de siège ; et dans lequel un mécanisme d'interverrouillage est associé au mécanisme de libération du verrou de siège, de façon telle qu'un déverrouillage du dossier soit interdit lorsqu'une pièce d'ancrage occupe la position d'utilisation.

6. Véhicule à moteur selon l'une quelconque des revendications 1 à 4, dans lequel est prévue une articulation qui déplace automatiquement les pièces d'ancrage, de la position d'utilisation à la position d'escamotage, lorsque le dossier est rabattu.

7. Véhicule à moteur selon l'une quelconque des revendications précédentes, dans lequel chaque pièce d'ancrage est munie d'une languette de sûreté, qui est interposée entre le dossier et la pièce d'ancrage lorsque ladite pièce d'ancrage occupe la position d'utilisation.

8. Véhicule à moteur selon la revendication 7, dans lequel chaque languette de sûreté est dotée d'un trou d'engagement d'un doigt, en vue de favoriser un soulèvement de la pièce d'ancrage la faisant sortir de la région située derrière ou sous l'assise.

9. Véhicule à moteur selon la revendication 7 ou la revendication 8, dans lequel la languette de sûreté est agencée ou conçue pour déplacer la ceinture de sécurité du siège vers l'un des côtés, lorsque sa pièce d'ancrage associée est soulevée, afin d'assurer que ladite ceinture n'entre pas en contact avec un verrou de siège d'enfant au cours de la mise en place du siège.

10. Véhicule à moteur selon l'une quelconque des revendications précédentes, dans lequel au moins l'une des pièces d'ancrage est équipée d'un capot conçu pour coiffer un boîtier d'encliquetage de la ceinture de sécurité lorsque ladite pièce d'ancrage occupe la position d'utilisation.

11. Véhicule à moteur selon la revendication 10 rattachée à la revendication 7, dans lequel le capot est une patte ou une oreille dépassant au-delà de la languette de sûreté.

12. Véhicule à moteur selon l'une quelconque des revendications précédentes, dans lequel la densité de moussage du matériau intégré dans le dossier est diminuée dans la région des pièces d'ancrage occupant la position d'utilisation.

13. Véhicule à moteur selon l'une quelconque des revendications précédentes, dans lequel est prévue une pièce supérieure d'amarrage à laquelle un siège d'enfant peut être ancré lorsqu'il est monté sur un siège du véhicule.

14. Dispositif d'ancrage d'un siège d'enfant (2) sur un siège de véhicule comprenant une assise (4) et un dossier (6), **caractérisé par le fait que** ledit dispositif comporte une paire de pièces d'ancrage (10) et une paire de consoles (20) pour monter lesdites pièces d'ancrage (10) par rapport à un siège du véhicule, les consoles (20) étant reliées ensemble par un moyen d'espacement (18), chaque pièce d'ancrage (10) étant montée pivotante sur une console associée (20), de façon telle que, lorsque les consoles sont adéquatement montées vis-à-vis d'un siège du véhicule, chaque pièce d'ancrage (10) puisse être animée de pivotements entre une position d'utilisation dans laquelle elle est engagée vers le haut à travers un interstice réservé entre l'assise (4) et le dossier (6), de façon qu'une attache (8) d'un siège d'enfant (2) puisse y être fixée ; et une position d'escamotage dans laquelle la pièce d'ancrage (10) est disposée derrière ou sous l'assise (4), les pièces d'ancrage (10) étant animées de pivotements forcés dans des directions mutuellement opposées lors d'un déplacement depuis la position d'utilisation jusqu'à la position d'escamotage, ou inversement.

15. Dispositif selon la revendication 14, dans lequel le moyen d'espacement est sensiblement rigide.

16. Dispositif selon la revendication 14 ou la revendication 15, dans lequel des moyens de sollicitation élastique sont prévus pour contraindre les pièces d'ancrage vers la position d'utilisation ou la position d'escamotage.

17. Dispositif selon l'une quelconque des revendications 14 à 16, dans lequel chaque pièce d'ancrage est pourvue d'une languette de sûreté conçue pour être interposée entre le dossier et la pièce d'ancrage lorsque ladite pièce d'ancrage est consignée à demeure vis-à-vis d'un siège du véhicule, et occupe la position d'utilisation.

18. Dispositif selon la revendication 17, dans lequel chaque languette de sûreté est dotée d'un trou d'engagement d'un doigt, en vue de favoriser un soulèvement de la pièce d'ancrage.
